# EUROPEAN PATENT SPECIFICATION

(11) **EP 4 228 431 B1**
(45) Date of publication and mention of the grant of the patent: **07.01.2026**
(21) Application number: 21805733.9
(22) Date of filing: 13.10.2021
(51) Int. Cl.: A23L 13/70, A22C 9/00

(54) **PORK BELLY PROCESSING**
SCHWEINEBAUCHVERARBEITUNG
TRANSFORMATION DE FLANC DE PORC

(30) Priority: 14.10.2020 US 202017070685
(43) Date of publication of application: 23.08.2023
(73) Proprietor: JBT Marel Corporation, Chicago, IL 60602 (US)
(72) Inventor: HUNT, Dale Robert, Valparaiso, Florida 32580 (US)
(74) Representative: AWA Sweden AB
(86) International application number: PCT/US2021/054676
(87) International publication number: WO 2022/081635

(56) References cited:
- US-A- 4 960 599
- US-A- 5 489 443
- ANONYMOUS: "Brine injection needles 20/03/2016BYCARNITEC17 VIEWS", 20 March 2016 (2016-03-20), XP055884022, Retrieved from the Internet <URL:https://carnitec.com/en/needles/> [retrieved on 20220126]
- AUSTIN C LOWDER ET AL: "Evaluation of a dehydrated beef protein to replace sodium-based phosphates in injected beef strip loins", MEAT SCIENCE, ELSEVIER SCIENCE, GB, vol. 89, no. 4, 16 May 2011 (2011-05-16), pages 491 - 499, XP028277713, ISSN: 0309-1740, [retrieved on 20110524], DOI: 10.1016/J.MEATSCI.2011.05.013
- P. O. SOLADOYE ET AL: "Review: Pork belly quality, bacon properties and recent consumer trends", CANADIAN JOURNAL OF ANIMAL SCIENCE., vol. 95, no. 3, 1 September 2015 (2015-09-01), CA, pages 325 - 340, XP055755056, ISSN: 0008-3984, DOI: 10.4141/cjas-2014-121

## Description

### BACKGROUND

In the processing of pork bellies to produce bacon, a brine is typically injected into the pork belly which contains components for both curing and flavoring the bacon resulting from the pork belly. Under U.S. government regulations, the net weight of the cured and smoked pork belly must be no greater than the initial weight of the green pork belly. This limits the quality of the brine that can be injected into the green pork belly. The present disclosure provides a method and system for injecting functional protein into a pork belly substrate so that the net weight of the cured and smoked pork belly is greater than the initial green weight of the pork belly, while meeting U.S. government regulations.

US 5 489 443 refers to a process for treating pork cuts with PSE (pale, soft and exudative) pork and composition thereof. The PSE is particulated and an aqueous suspension of the particulated pork is prepared, and the suspension is impregnated into a cut of normal pork.

US 4 960 599 refers to a process for injecting a cold particle suspension consisting of trim from like meat and a brine solution into relatively warm, raw meat muscle thereby increasing the weight of said untreated meat with no flavor loss.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with one embodiment of the present disclosure, not forming part of the invention, a method is provided for processing a green pork belly having an initial weight. The method includes injecting a composition of pork protein and water into the pork belly, injecting a curing brine into the pork belly, and curing the pork belly with the composition of pork protein and water and the curing brine injected therein.

In any of the embodiments described herein, further comprising mixing the curing brine with the mixture of pork protein and water and injecting the resulting mixture into the pork belly.

In any of the embodiments described herein, further comprising emulsifying the pork protein and water prior to injection into the pork belly.

In any of the embodiments described herein, further comprising proportioning the pork protein and water in the mixture at a ratio corresponding to the proportion of pork protein and water of the green pork belly.

In any of the embodiments described herein, wherein the proportion of pork protein is from 6% to 9% of the weight of the pork protein and water mixture.

In any of the embodiments described herein, further comprising injecting the mixture of pork protein and water into the pork belly in an amount of from 1% to 15% of the initial weight of the pork belly.

In any of the embodiments described herein, further comprising injecting the mixture of pork protein and water injected into the pork belly in an amount from 4% to 10% of the initial weight of the pork belly.

In any of the embodiments described herein, further comprising injecting the mixture of pork protein and water into the pork belly in an amount that the initial weight of the pork belly is increased by a maximum of 15%.

In any of the embodiments described herein, further comprising injecting the mixture of pork protein and water into the pork belly with tapered injection needles.

In any of the embodiments described herein, wherein the injection needles have an injection end have an outer diameter of from 2.5 mm to 3.0 mm.

In any of the embodiments described herein, wherein the injection end of the injection needle has an inner diameter of 1.0 mm to 1.5mm

In any of the embodiments described herein, further comprising massaging the pork belly after injection of the mixture of pork protein and water.

In any of the embodiments described herein, further comprising smoking the pork belly.

In accordance with another embodiment of the present disclosure, a system with the features of claim 1 for processing green pork bellies is provided. The system includes an injection system for injecting a protein composition consisting of a mixture of pork protein and water into the pork belly, the injection system comprising a plurality of longitudinal injection needles supported by a needle carrier during injection of the protein composition into the pork belly.

The injection needles comprise a hollow needle body having a proximal inlet end for receiving the protein composition, a distal tapered tip portion for delivering the protein composition into the pork belly, and at least one inlet port extending through the inlet end portion of the needle, the inlet port being beveled or curved outwardly in the direction that the inlet port extends outwardly from the interior of the hollow needle.

In any of the embodiments described herein, wherein the relative amounts of pork protein and water in the protein composition corresponds to that of a green pork belly.

The inlet port is elongated in the direction along the length of the needle.

In any of the embodiments described herein, wherein the injection system further comprises a feed chamber for supplying the protein composition to the injection needles.

In any of the embodiments described herein, further comprising a weighing subsystem for weighing the pork bellies prior to being injected with the protein composition.

In any of the embodiments described herein, further comprising a second weighing subsystem for weighing the pork bellies after being injected with the protein composition.

In any of the embodiments described herein, further comprising a massaging unit for receiving the pork bellies after injection with the protein composition and massaging the injected pork bellies.

In any of the embodiments described herein, further comprising an emulsifier to emulsify the protein composition prior to injection into the pork belly.

In any of the embodiments described herein, further comprising a curing brine production unit for producing curing brine for mixing with the protein composition for simultaneous injection into the pork belly.

In any of the embodiments described herein, further comprising an emulsifier to emulsify the protein composition together with the curing brine prior to injection into the pork belly.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a schematic view of one method of the present disclosure;
FIGURES 2A and 2B are schematic views of a system in accordance with FIGURE 1;
FIGURE 3 illustrates a needle carrier used to carry the injection needles of the present disclosure;
FIGURE 4 is an elevational view of an injection needle of the present disclosure;
FIGURE 5 is an enlarged fragmentary view of a portion of the needle of FIGURE 4;
FIGURE 6 is an enlarged fragmentary view of a portion of the needle of FIGURE 4;
FIGURE 7 is an enlarged cross-sectional view of FIGURE 4 taken along lines 7-7 thereof;
FIGURE 8 is a cross-sectional view of FIGURE 4 similar to FIGURE 7, illustrating an alternative cross-sectional view;
FIGURE 9 is an enlarged, fragmentary view of a portion of the needle of FIGURE 4, partially in cross-section.

### DETAILED DESCRIPTION

In the following description and in the accompanying drawings, corresponding systems, assemblies, apparatus, and units may be identified by the same part number, but with an alpha suffix. The descriptions of the parts/components of such systems assemblies, apparatus, and units that are the same or similar are not repeated so as to avoid redundancy in the present application.

The description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well known process steps have not been described in detail in order not to unnecessarily obscure various aspects of the present disclosure. Further, it will be appreciated that embodiments of the present disclosure may employ any combination of features described herein.

The present application may include references to "directions," such as "forward," "rearward," "front," "back," "ahead," "behind," "upward," "downward," "above," "below," "horizontal," "vertical," "top," "bottom," "right hand," "left hand," "in," "out," "extended," "advanced," "retracted," "proximal," and "distal." these references and other similar references in the present application are only to assist in helping describe and understand the present disclosure and are not intended to limit the present invention to these directions.

The present application may include modifiers such as the words "generally," "approximately," "about," or "substantially." These are meant to serve as modifiers to indicate that the "dimension," "shape," "temperature," "time," or other physical parameter in question need not be exact, but may vary as long as the function that is required to be performed can be carried out. For example, in the phrase "generally circular in shape," the shape need not be exactly circular as long as the required function of the structure in question can be carried out.

In the present application the terms "functional protein" or "protein composition" mean protein that corresponds to that which is naturally occurring in the pork belly.

In the present application the term "bacon brine" also is commonly referred to in the art as " bacon cure" or "bacon pickle."

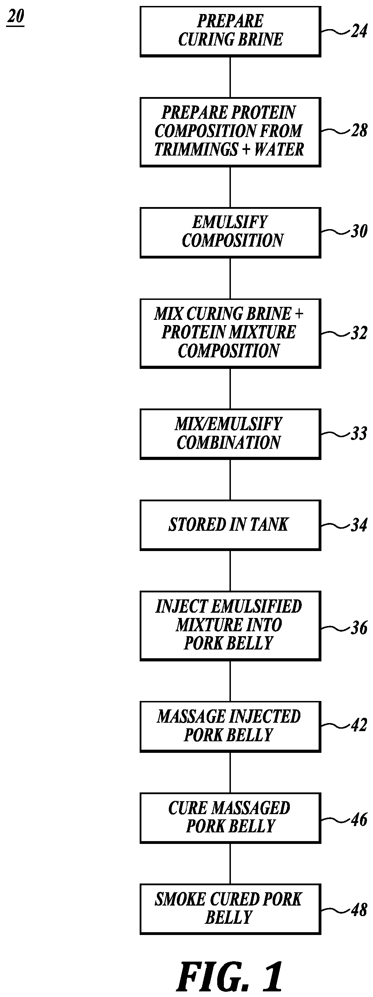

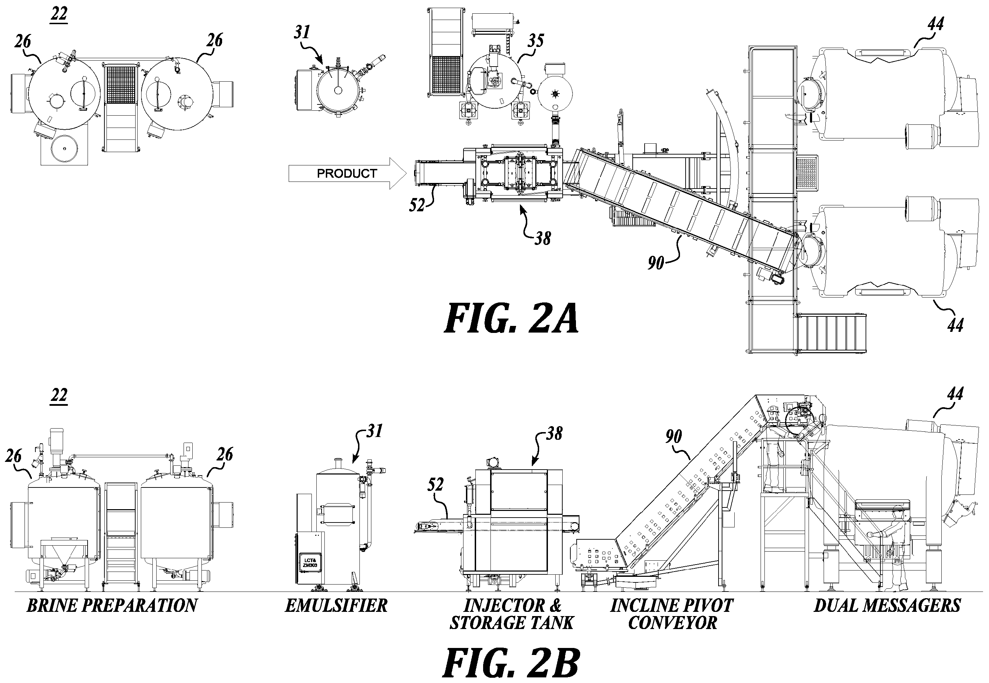

Referring initially to FIGURES 1, 2A, and 2B, a process 20 and a system 22 for processing pork bellies in accordance with the present disclosure are schematically illustrated. As shown in FIGURE 1, in step 24 curing brine for curing the pork bellies is prepared in mixing tanks 26 as shown in FIGURES 2A and 2B. Next, a protein composition is prepared in step 28, with the composition corresponding to the protein composition of natural or functional pork belly. Thereafter, in step 30 the protein composition is emulsified in emulsifier 31. Next, in step 32 the brine and emulsified protein are combined, and in step 33 optionally emulsified, and then in step 34 placed into a storage tank 35.

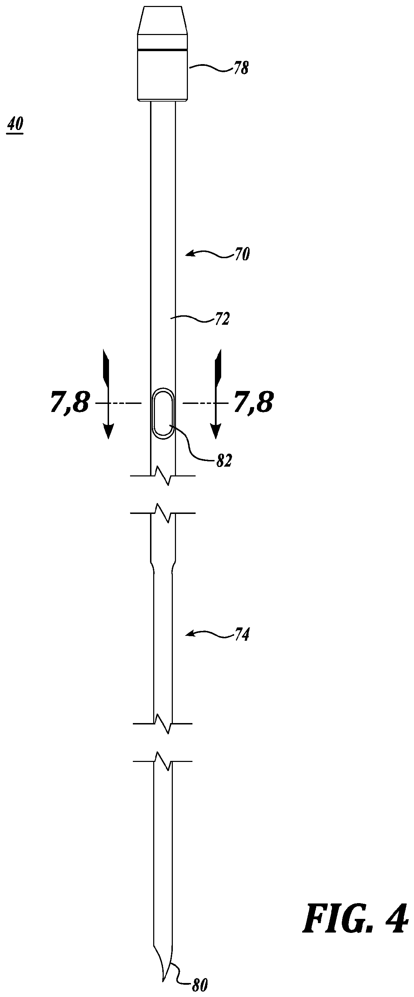

Next, in step 36 the combination from step 33 is injected into green pork bellies using injection system 38 composed in part of specially designed injection needles 40, see FIGURE 4. This initiates the curing of the pork bellies. Thereafter, in step 42 the injected pork bellies are optionally massaged in massagers 44 to distribute the combined brine and protein mixture throughout the pork belly. Massaging can also tenderize the pork belly. Next, in steps 46 and 48 the pork bellies can be allowed to continue to cure and then the pork bellies are smoked using established procedures.

Next, discussing in greater detail the foregoing process steps and system components, the brine for the pork belly is prepared from water, salt, sugar, flavorings, sodium phosphate (for moisture balance) and cure salt. The amount of water in the brine is typically about 70% to 80% by weight, and the amount of sodium phosphate in the brine is typically about from 2% to 6% by weight. The amount of salt, sugar, and flavorings depends on the flavor profile of the bacon sought to be obtained. For example, the amount of salt in the brine can be from about 10% to 20% by weigh of the brine, and the amount of sugar can be about 3% to 8% by weight of the brine. Typical flavorings include maple flavoring, honey, pepper, and liquid smoke.

Cure salt is a mixture of salt and sodium nitrate, and has long been used for curing meat. The amount of cure salt in the brine is typically from 1% to 3.5% of the weight of the brine.

The brine may also include sodium erythorbate to accelerate the curing process. The amount sodium ascorbate in the brine can be approximately from .25% to .5% by weight.

As noted above, the brine is prepared in mixing tanks 26. The brine is typically prepared in volumes from about 946 liters (250 gallons) to 3785 liters (1000 gallons). The tanks are designed to permit the brine to be stored in the tanks until used.

The protein composition consists of natural pork belly trimmings combined with water at a ratio to correspond to the composition of the natural pork belly protein. In addition to functional protein, the prepared composition will also include fat at a level corresponding to that in a natural pork belly. As such, the amount of pork protein in the mixture is about 6% to 9% by weight, the amount of fat in the mixture is about 25% to 35% percent by weight, and the amount of water comprising the residual of the mixture. The pork belly trimmings, containing protein and fat, are macerated prior to combining with water. This combination is then emulsified in emulsifier 31 to facilitate injection into the pork belly, as described below.

The brine and protein composition can be combined (mixed) together and thereafter emulsified for injection together into the pork belly. Alternatively, the brine and protein composition can be injected separately into the pork belly. The emulsification is stored in storage tank 35 until needed for injection into the pork bellies. The ratio of brine to protein composition can be from about 6:1 to about 2:1. As a nonlimiting example the ratio of brine to protein composition can be about 4:1.

Injection of the emulsification into the pork bellies occurs at injection station 38. The injection station includes a conveyor 52 that transports pork bellies beneath a needle carrier 54 that is supported above the conveyor.

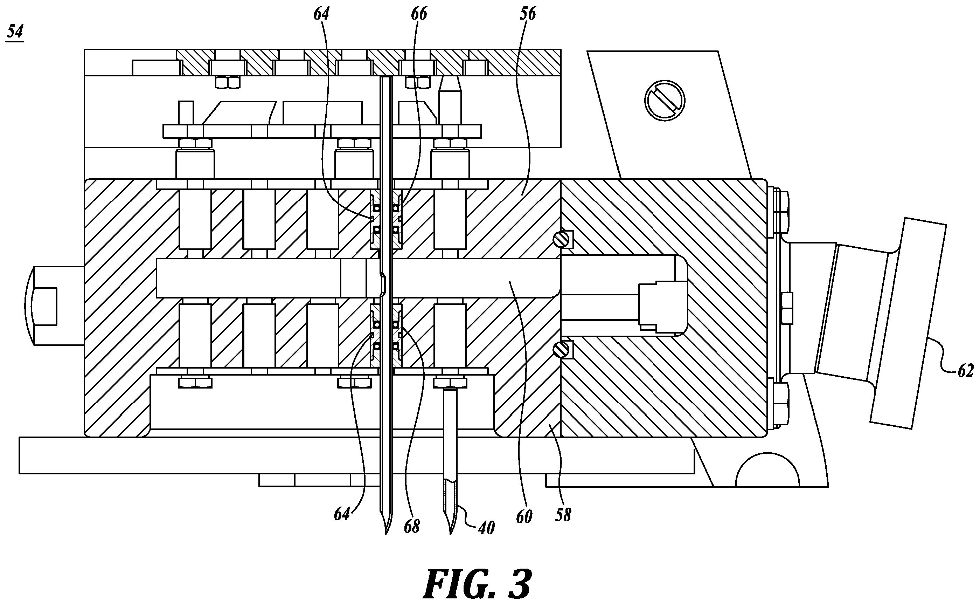

The needle carrier 54, as shown in FIGURE 3, includes carrier upper section 56 and a carrier lower section 58 to define a feeder supply chamber 60 therebetween. An inlet port 62 connects the supply chamber 60 to the storage tank 35.

A plurality of injection needles 40 are supported by the carrier 54. In this regard, seal rings 64 are disposed within counter bores 66 and 68 extending downwardly into the carrier upper section 56 and upwardly into the carrier lower section 58. The seal rings 64 are retained within the counter bores 66 and 68 to closely receive needles 40.

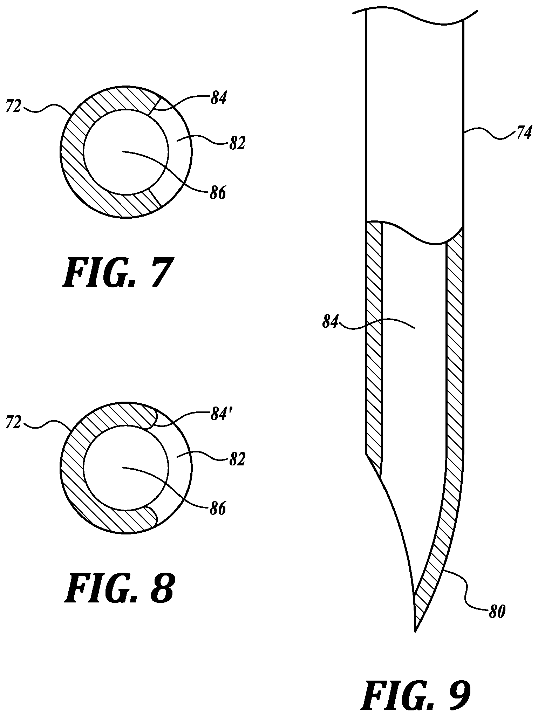

Referring to FIGURES 4-9, the injection needles 40 are constructed with an elongated hollow shank 70 having a larger diameter upper section 72 and a smaller diameter lower section 74. The needle also includes an upper end 76 that is securely engaged within the inner diameter of a head 78 constructed to receive the plunging force used to insert the needle tip 80 into the pork belly being processed. The tip can be of various configurations, including a hypodermic type tip as shown in FIGURES 4 and 9.

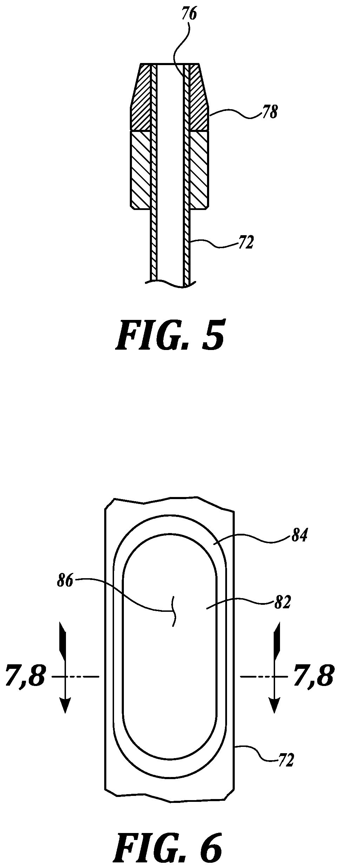

An inlet opening 82 is formed in the upper shank section 72 so as to be in registry with the supply chamber 60. As shown in FIGURES 4 and 6, the inlet opening 82 is elongated along the length of the needle 40. The size of the opening 82 is about 7mm in length and 2.5 mm in width. Of course, these dimensions may be increased or decreased in size. As a non-limiting example, the length of the opening may be from about 5 mm to about 10 mm. Correspondingly, as a nonlimiting example, the width of the opening can be from about 2 mm to about 4 mm. Also, although one inlet opening 82 is illustrated, more than one inlet opening can be employed.

Moreover, as shown in FIGURE 7, the edge 84 of the inlet opening 82 is beveled outwardly in the direction extending outwardly from the interior 86 of the hollow needle 40. The bevel angle can be of various degrees, for example, from about 30° to 60°. As a further example, the bevel angle can be about 45°.

As another example, the edge of the inlet opening can be curved or radiused rather than in the form of a bevel, as shown in FIGURE 8. The curvature may extend across the entire wall thickness of the entrance opening 82 or may be limited to the intersection of the opening edge and the outer surface of the needle shank.

By tapering, beveling, radiusing, or curving the inlet opening 82, components of the mixture being injected at injection station 38, including the emulsification described above, have less tendency to build up at the inlet opening 82. If the inlet opening 82 is not beveled or tapered or radiused or curved, components of the emulsification, especially solid material or fat or gelatinous material, will tend to build up at the inlet opening 82, including at the corner of the opening during use of the hollow injection needle. Over time, buildup of such material can significantly reduce the size of the inlet opening or even cause the inlet opening to close all together. However, by beveling or tapering or radiusing, or curving the inlet opening 82, as shown in FIGURES 7 and 8, and as described above, there is less likelihood that the injected materials will collect or build up at the inlet opening.

As noted above, the needle shank 70 is constructed with a larger diameter upper section 72 and a smaller diameter lower section 74. In this regard, the upper section may have a diameter in the range of 4-5 mm, with the lower section having a diameter of 2-2.5 mm. As one nonlimiting example, the needle shank 70 could be constructed with an upper section having a 4.0 mm outer diameter and a lower section with a 2.5 mm outer diameter. This results in an inside diameter of about 1.0 mm. This construction enables the emulsion to enter the needle sufficiently quickly to keep the needle filled with emulsion / brine combination during the injection process. On the other hand, the reduced diameter lower section 75 of the needle enables more uniform distribution of the brine / protein emulsion in the pork belly. In this regard, the needle can, if desired, be arranged in a denser pattern than would normally be the case when injecting other cuts of pork or when injecting other meats, such a beef.

There are regulations as to the amount of brine and/or functional protein that may be injected into a pork belly. If only brine is being injected, the end weight of the pork belly after curing and smoking can be no more than the original weight of the green pork belly. However, if functional protein is being injected into the pork belly, the end weight of the pork belly can exceed the green initial weight of the pork belly by up to 15%. However, if a significant amount of functional protein is added to the pork belly, negative consequences can result, including formation of "pickle pockets" that can lead to separation of the lean from the fat when the pork belly is sliced. Usually, limiting the gain in weight of the pork belly to from about 4% to 10% avoids the above negative results of excess injection of functional protein into a pork belly.

The protein composition/brine mixture can be injected into the pork belly under various conditions, for example, the temperature of the mixture. As a nonlimiting example, the mixture could be a temperature in the range of about 1.7 to 7.2 °C (35 to 45°F) when injected into the pork belly. The pork belly can be of a similar temperature, but also can be at a lower temperature or at a higher temperature.

After injection of the protein emulsion/brine into the pork belly, the pork belly is optionally massaged (tumbled) in a commercial massager, such as unit 44 illustrated in FIGURES 2A and 2B. Massaging may not be needed, especially if the quantity of the protein composition /brine mixture is low or moderate, for example less that about 18% by weight of the pork belly. A conveyor 90 extends between the outlet of injection station conveyor 52 and the inlets to the massagers 44, which are located side-by-side, see FIGURE 2A. The conveyor 90 is able to pivot between the inlets of the two massagers 44. Two massagers 44 are needed to handle the volume of pork bellies being processed by the method 20 and system 22 of the present disclosure.

Massagers, such as units 44, our articles of commerce. Such massagers function to distribute the injected brine/protein emulsion throughout the volume of the pork belly. Massaging also can assist in tenderizing the pork belly, facilitate even color development of the pork belly from the cure, and increase slice yields. After completion of the massaging, the pork bellies are transported to a curing room, where the pork bellies are hung vertically in a controlled atmosphere for a fixed period of time. Such atmosphere typically includes a temperature in the range of 1.7 to 5.6 °C (35 degrees to 42 degrees F). The bellies are typically hung and the got to the smoke house, curing time may be 30 minutes to 2 hours about 3.3 to 5.6 °C (38 degrees Fahrenheit to about 42 degrees Fahrenheit). The pork bellies are typically cured for a period of time of about 30 minutes to about 2 hours. Curing of the pork belly originally was to preserve the pork bellies but since the advent of refrigeration, the main function of curing is to develop and enhance the color and flavor of bacon derived from the pork bellies.

Lastly, the pork bellies are smoked to impart a desired smoky flavor to the pork bellies. The smoking occurs under standard protocols.

### Example 1:

Tests were conducted to determine the effect of adding the protein composition to the pork belly and then processing the pork belly in a normal manner. In the first test control sample having a green weight of 2.18 kg (4.81 pounds) was injected with bacon brine in an amount of 12.5% by weight. This resulted in an injected weight of 2.46 kg (5.42 pounds). This sample was smoked on the same day that the brine injection occurred. The brine consisted of water in the amount of 74.4%, salt in the amount of 14.9%, sodium phosphate in the amount of 3.7%, sugar in the amount of 4.7%, cure sold in the amount of 1.9%, and sodium erythorbate in the amount of .4% by weight.

The test sample was injected with a protein composition in an amount of 5% by weight. This sample after injection of the protein composition had a weight of 2.32 kg (5.13 pounds). This was considered the green weight of the sample. The test sample was also injected with bacon brine in an amount of 12.5% by weight, thereby resulting in an injected weight of the test sample of 2.59 kg (5.71 pounds). The test sample was massaged after injection of the protein composition and brine. As in the control sample, the test sample was smoked on the same day that injection of the protein composition and brine occurred.

The results of the test are set forth in the table below. After smoking of the pork belly samples, the resulting weights of the control sample and test sample were measured. The smoked weight of the control sample was 2.20 kg (4.85 pounds), and that the smoked weight of the test sample was 2.34 kg (5.15 pounds). Thus, both the control sample and test sample weighed within 1% of the green weight after processing. This means that the weight added to the test sample by injection of the protein composition was retained within the processed pork belly.

| **Cook Data (Same Day)** | | | | | |
|---|---|---|---|---|---|
| **Test** | **Green Wt** | **Inject Wt** | **Cook Wt** | **Cook Yield** | **Yield to Green** |
| Control | 4.81 | 5.42 | 4.85 | 89.48% | 100.8% |
| Proteus Test w/ Massage (5%) | 5.13 | 5.71 | 5.15 | 90.19% | 100.4% |

### Example 2:

A test similar to that discussed above in Example 1 was carried out, but with the pork bellies cured overnight and then smoke the next day. In this test, the control sample having a green weight of 2.37 kg (5.23 pounds) was injected with bacon brine in an amount of 12.5% by weight. This resulted in an injected weight of 2.67 (5.89 pounds). The composition of the brine corresponded to the specified above in Example 1.

The test sample was injected with a protein composition in an amount of 5% by weight. This sample after injection of the protein composition had a weight of 2.45 kg (5.40 pounds). This was considered the green weight of the sample. The test sample was also injected with bacon brine in an amount of 12.5% by weight, thereby resulting in an injected weight of the test sample of 2.73 kg (6.01 pounds). The test sample was massaged after injection of the protein composition and brine.

Both the control sample and test sample were cured overnight, and then smoked the next day. Thereafter, the weights of the control sample and test sample were measured, resulting in a final weight of 2.36 kg (5.21 pounds) for the control sample and 2.44 kg (5.39 pounds) for the test sample. Thus, both the control sample and test sample weighed within 1% of the green weight after processing. This means that the weight added to the test sample by injection of the protein composition was retained within the processed pork belly.

| **Cook Data (Overnight Hold)** | | | | | |
|---|---|---|---|---|---|
| **Test** | **Green Wt** | **Inject Wt** | **Cook Wt** | **Cook Yield** | **Yield to Green** |
| Control | 5.23 | 5.89 | 5.21 | 88.46% | 99.6% |
| Proteus Test w/ Massage (5%) | 5.40 | 6.01 | 5.39 | 89.68% | 99.9% |

While illustrative embodiments have been illustrated and described, it will be appreciated that various changes can be made therein without departing from the and scope of the invention. For example, a weighing system can be employed to weigh the pork bellies prior to injection of the protein composition/taken brine. The same or second weighing system can be employed to weigh the pork bellies after completion of processing including smoking of the pork bellies. As such, it is possible to confirm that the fully processed pork bellies cannot exceed their green weight. Such weighing can be conducted on a sampling basis using appropriate statistical analysis. It is also possible that such weighing be applied to most if not all of pork bellies processed.

## Claims

1. A system for processing green pork bellies, comprising:
an injection system (38) for injecting an emulsified protein and fat composition comprising a mixture of pork protein, pork fat and water into the pork belly, the injection system (38) comprising a plurality of longitudinal injection needles (40) supported by a needle carrier (54) during injection of the mixture of pork protein, pork fat and water into the pork belly; and
wherein the injection needles (40) comprise a hollow needle body having a proximal inlet end for receiving the emulsified protein composition, a distal tapered tip portion for delivering the emulsified pork protein and pork fat composition into the pork belly, and at least one inlet opening (82) extending through the inlet end portion of the needle (40), the inlet opening (82) being elongated in the direction along the length of the needle (40) and also being beveled or curved outwardly in the direction that the inlet opening (82) extends outwardly from the interior (86) of the hollow needle (40).

2. The system according to claim 1, wherein the bevel angle is from about 30° to 60° and more specifically about 45°.

3. The system according to any one of Claims 1-2, further comprising a weighing subsystem for weighing the pork bellies prior to being injected with the emulsified protein and fat composition.

4. The system according to any one of Claims 1-3, further comprising a second weighing subsystem for weighing the pork bellies after being injected with the emulsified protein and fat composition.

5. The system according to Claim 1-4, further comprising an emulsifier (31) to emulsify the protein and fat composition prior to injection into the pork belly.

6. The system according to any one of Claims 1-5, further comprising a curing brine production unit for producing curing brine for mixing with the emulsified protein and fat composition for simultaneous injection into the pork belly.

7. The system according to Claim 6, further comprising an emulsifier (31) to emulsify the protein and fat composition together with the curing brine prior to injection into the pork belly.

## Patentansprüche

1. System zum Verarbeiten von rohen Schweinebäuchen, umfassend:
ein Injektionssystem (38) zum Injizieren einer emulgierten Protein- und Fettzusammensetzung, die eine Mischung aus Schweineprotein, Schweinefett und Wasser umfasst, in den Schweinebauch, wobei das Injektionssystem (38) eine Vielzahl von länglichen Injektionsnadeln (40) umfasst, die während der Injektion der Mischung aus Schweineprotein, Schweinefett und Wasser in den Schweinebauch von einem Nadelträger (54) getragen werden; und
wobei die Injektionsnadeln (40) einen Hohlnadelkörper umfassen, der ein proximales Einlassende zum Aufnehmen der emulgierten Proteinzusammensetzung, einen distalen, konischen Spitzenabschnitt zum Abgeben der emulgierten Zusammensetzung aus Schweineprotein und Schweinefett in den Schweinebauch und mindestens eine Einlassöffnung (82) aufweist, die sich durch den Einlassendabschnitt der Nadel (40) erstreckt, wobei die Einlassöffnung (82) in der Richtung entlang der Länge der Nadel (40) langgestreckt ist und auch in der Richtung, in der sich die Einlassöffnung (82) von dem Inneren (86) der Hohlnadel (40) nach außen erstreckt, nach außen abgeschrägt oder gekrümmt ist.

2. System nach Anspruch 1, wobei der Abschrägungswinkel von etwa 30° bis 60° und insbesondere etwa 45° beträgt.

3. System nach einem der Ansprüche 1-2, ferner umfassend ein Wiege-Teilsystem zum Wiegen der Schweinebäuche, bevor die emulgierte Protein- und Fettzusammensetzung in sie injiziert wird.

4. System nach einem der Ansprüche 1-3, ferner umfassend ein Wiege-Teilsystem zum Wiegen der Schweinebäuche, nachdem die emulgierte Protein- und Fettzusammensetzung in sie injiziert wurde.

5. System nach Anspruch 1-4, ferner umfassend einen Emulgator (31), um die Protein- und Fettzusammensetzung vor der Injektion in den Schweinebauch zu emulgieren.

6. System nach einem der Ansprüche 1-5, ferner umfassend eine Pökellaken-Herstellungseinheit zum Herstellen einer Pökellake, um diese für eine gleichzeitige Injektion in den Schweinebauch mit der emulgierten Protein- und Fettzusammensetzung zu mischen.

7. System nach Anspruch 6, ferner umfassend einen Emulgator (31), um die Protein- und Fettzusammensetzung zusammen mit der Pökellake vor der Injektion in den Schweinebauch zu emulgieren.

## Revendications

1. Système de traitement de poitrines de porc non saumurées, comprenant :
un système d'injection (38) pour injecter dans la poitrine de porc une composition émulsionnée de protéines et de matières grasses comprenant un mélange de protéines de porc, de graisse de porc et d'eau, le système d'injection (38) comprenant une pluralité d'aiguilles d'injection longitudinales (40) supportées par un porte-aiguilles (54) pendant l'injection du mélange de protéines de porc, de graisse de porc et d'eau dans la poitrine de porc ; et
dans lequel les aiguilles d'injection (40) comprennent un corps d'aiguille creux doté d'une extrémité proximale d'entrée pour recevoir la composition protéique émulsionnée, d'une extrémité distale effilée pour injecter la composition émulsionnée de protéines et de graisse de porc dans la poitrine de porc, et d'au moins une ouverture d'entrée (82) traversant l'extrémité d'entrée de l'aiguille (40), l'ouverture d'entrée (82) étant allongée dans la direction de la longueur de l'aiguille (40) et biseautée ou incurvée vers l'extérieur dans la direction où l'ouverture d'entrée (82) s'étend vers l'extérieur depuis l'intérieur (86) de l'aiguille creuse (40).

2. Système selon la revendication 1, dans lequel l'angle de biseau est compris entre environ 30° et 60° et plus particulièrement d'environ 45°.

3. Système selon une quelconque des revendications 1 et 2, comprenant en outre un sous-système de pesage pour peser les poitrines de porc avant l'injection de la composition émulsionnée de protéines et de graisse.

4. Système selon une quelconque des revendications 1 à 3, comprenant en outre un deuxième sous-système de pesage pour peser les poitrines de porc après l'injection de la composition de protéines et de matières grasses émulsionnée.

5. Système selon la revendication 1 à 4, comprenant en outre un émulsifiant (31) pour émulsionner la composition de protéines et de matières grasses avant l'injection dans la poitrine de porc.

6. Système selon une quelconque des revendications 1 à 5, comprenant en outre une unité de production de saumure de salaison destinée à être mélangée à la composition de protéines et de matières grasses émulsionnée pour une injection simultanée dans la poitrine de porc.

7. Système selon la revendication 6, comprenant en outre un émulsifiant (31) pour émulsionner la composition de protéines et de matières grasses avec la saumure de salaison avant l'injection dans la poitrine de porc.
